Europäisches Patentamt

European Patent Office

Office européen des brevets

(19)

(11) Veröffentlichungsnummer : **0 302 272 B1**

# (12) EUROPÄISCHE PATENTSCHRIFT

(45) Veröffentlichungstag der Patentschrift :
10.04.91 Patentblatt 91/15

(51) Int. Cl.⁵ : **F28D 20/00, B60H 1/00**

(21) Anmeldenummer : **88111237.9**

(22) Anmeldetag : **13.07.88**

(54) Wärmespeicher, insbesondere Latentwärmespeicher.

(30) Priorität : 29.07.87 DE 3725165

(43) Veröffentlichungstag der Anmeldung :
08.02.89 Patentblatt 89/06

(45) Bekanntmachung des Hinweises auf die
Patenterteilung :
10.04.91 Patentblatt 91/15

(84) Benannte Vertragsstaaten :
**DE ES FR GB IT NL SE**

(56) Entgegenhaltungen :
**DE-A- 3 018 781**

(56) Entgegenhaltungen :
**DE-A- 3 212 043**
**DE-A- 3 245 027**
**DE-C- 691 755**
**US-A- 2 964 064**

(73) Patentinhaber : **Schatz, Oskar, Dr.-Ing.**
**Waldpromenade 16**
**W-8035 Gauting (DE)**

(72) Erfinder : **Schatz, Oskar, Dr.-Ing.**
**Waldpromenade 16**
**W-8035 Gauting (DE)**

(74) Vertreter : **Lamprecht, Helmut, Dipl.-Ing.**
**Corneliusstrasse 42**
**W-8000 München 5 (DE)**

## Beschreibung

Die Erfindung betrifft einen Wärmespeicher, insbesondere einen Latentwärmespeicher für durch Motorabwärme gespeiste Kraftfahrzeugheizungen, mit einem einen Speicherkern umschließenden inneren Gehäuse und mit einem das innere Gehäuse mit Abstand umgebenden äußeren Gehäuse, mit einer Wärmeisolierung zwischen innerem und äußerem Gehäuse und mit einer Zuflußleitung und einer abflußleitung für ein wärmetransportierendes Strömungsmittel, die durch die Wärmeisolierung zum inneren Gehäuse führen.

Um die gespeicherte Wärme möglichst vor Verlusten zu schützen, ist eine hochwirksame Isolierung zwischen innerem und äußerem Gehäuse erforderlich, wobei insbesondere auch ein verhältnismäßig geringes Volumen der Isolierung erwünscht ist, damit das Gesamtvolumen des Wärmespeichers klein gehalten werden kann, wie dies insbesondere beim Einbau in Kraftfahrzeuge erforderlich ist, weil nur geringer Raum für zusätzliche Aggregate zur Verfügung steht. Um das Fahrzeuggewicht nicht zusätzlich zu belasten, soll auch das Gewicht eines derartigen Wärmespeichers gering gehalten werden.

Eine diesen Anforderungen besonders gerecht werdende Isolierung ist ein Vakuumspalt zwischen innerem und äußerem Gehäuse. Dabei ist eine Fixierung des inneren Gehäuses innerhalb des äußeren Gehäuses erforderlich, die ihrerseits ein möglichst geringes Gewicht aufweisen und möglichst geringe Wärmeverluste verursachen soll.

Der Erfindung liegt deshalb die Aufgabe zugrunde, einen Wärmespeicher der eingangs genannten Art derart auszubilden, daß das innere Gehäuse in möglichst einfacher Weise zuverlässig im äußeren Gehäuse festgelegt ist, wobei diese Fixierung außerdem den Anforderungen nach möglichst geringem Gewicht, möglichst geringen Wärmeverlusten und Ausgleich der bei Temperaturschwankungen auftretenden Wärmedehnungen entsprechen soll.

Die Lösung dieser Aufgabe besteht erfindungsgemäß darin, daß das innere Gehäuse an zwei voneinander abgewandten Stirnseiten über jeweils eine Gruppe von für die übertragung von Zugkräften dimensionierten Stegen am äußeren Gehäuse aufgehängt ist und daß zwischen einer Stirnwand des inneren Gehäuses und dem äußeren Gehäuse zumindest eine Feder derart eingespannt ist, daß sie bestrebt ist, die Stege auf Zug zu belasten.

Die Fixierung des inneren Gehäuses im äußeren Gehäuse durch eine Aufhängung bietet den Vorteil, daß im wesentlichen nur Zugkräfte übertragen werden müssen, wodurch geringe Querschnitte möglich werden, die einerseits das erforderliche Gewicht und andererseits auch die auftretenden Wärmeverluste gering halten. Jede Gruppe von Stegen umfaßt mindestens zwei, vorzugsweise aber etwa drei bis vier Stege, um seitlichen Verlagerungen der Gehäuse zueinander entgegenzuwirken.

Eine vorteilhafte Ausgestaltung besteht auch darin, daß die Zufluß- und die Abflußleitung zumindest in der Nähe der Stirnwand des inneren Gehäuses austreten, an der die Feder angreift. Hierdurch wird eine Relativbewegung des inneren und des äußeren Gehäuses im Bereich der Leitungsrohre reduziert und diese Leitungsrohre werden mechanisch entlastet.

Nach einer besonders zweckmäßigen Ausbildung sind die Stege zumindest einer Gruppe zu einem Aufhängeelement vereinigt, wodurch sich eine besonders einfache Montage ergibt.

Eine weitere zweckmäßige Ausbildung besteht darin, daß zumindest eine Aufhängevorrichtung verdrehfest mit dem inneren Gehäuse verbunden ist, wobei vorzugsweise an einer Stirnwand des inneren Gehäuses in symmetrischer Anordnung und mit Abstand voneinander zwei Befestigungspunkte für die Aufhängevorrichtung angeordnet sind. Dabei besteht eine weitere zweckmässige Ausbildung darin, daß die Aufhängevorrichtung zwei den Befestigungspunkten am inneren Gehäuse zugeordnete Anschlußstellen aufweist, von denen aus je weils zwei V-förmig angeordnete Stege zu einem äußeren Rahmen verlaufen, die die andere Anschlußstelle auf ihrer Winkelhalbierenden zwischen sich einschließen, so daß sich die beiden V-förmig angeordneten Stegpaare unter Bildung eines rautenförmigen innens Rahmens kreuzen.

Die Feder kann entweder zwischen einander gegenüberliegenden Stirnwänden des inneren und des äußeren Gehäuses oder zwischen der Stirnwand des inneren Gehäuses und dem dieser Stirnwand zugeordneten Aufhängeelement eingespannt sein. Vorzugsweise ist die Feder im Zentrum der Stirnfläche des inneren Gehäuses abgestützt.

Nach einer weiteren zweckmäßigen Ausbildung kann das Aufhängeelement an der mit der Feder zusammenwirkenden Stirnwand des inneren Gehäuses mit einer zentralen Anschlußstelle versehen sein, in welcher sich die Stege vereinigen.

Vorzugsweise ist an der von der Feder beaufschlagten Stirnfläche eine Führungshülse für die Feder angeordnet und die zentrale Anschlußstelle der Aufhängevorrichtung ist als ein diese Führungshülse umgreifender Ring ausgebildet.

Eine weitere zweckmäßige Ausbildung besteht darin, daß die wirksame Länge der Feder einstellbar ist.

Vorzugsweise sind die Aufhängeelemente als Stanzteile ausgebildet.

Anhand der nun folgenden Beschreibungh eines in der Zeichnung dargestellten Ausführungsbeispiels der Erfindung wird diese näher erläutert.

Es zeigt :

Fig. 1 einen Axialschnitt durch einen erfindungsgemäß gestalteten Wärmespeicher mit zylindrischer Gehäuseform,

Fig. 2 eine Variante des in Fig. 1 linken Endes des Wärmespeichers,

Fig. 3 eine Ansicht des in Fig. 1 links angeordneten Aufhängeelements und

Fig. 4 eine Ansicht des in Fig. 1 rechts angeordneten Aufhängeelements.

Der dargestellte Wärmespeicher besteht aus einem inneren Gehäuse 10 und einem äußeren Gehäuse 12, zwischen welchen eine Vakuumkammer 14 ausgebildet ist. Eine Zuflußleitung 16 und eine Abflußleitung 18 sind im oberen Bereich einer Stirnwand 20 des inneren Gehäuses 10 an diesem angeschlossen und sind durch die Vakuumkammer 14 vertikal nach unten aus dem äußeren Gehäuse 12 herausgeführt.

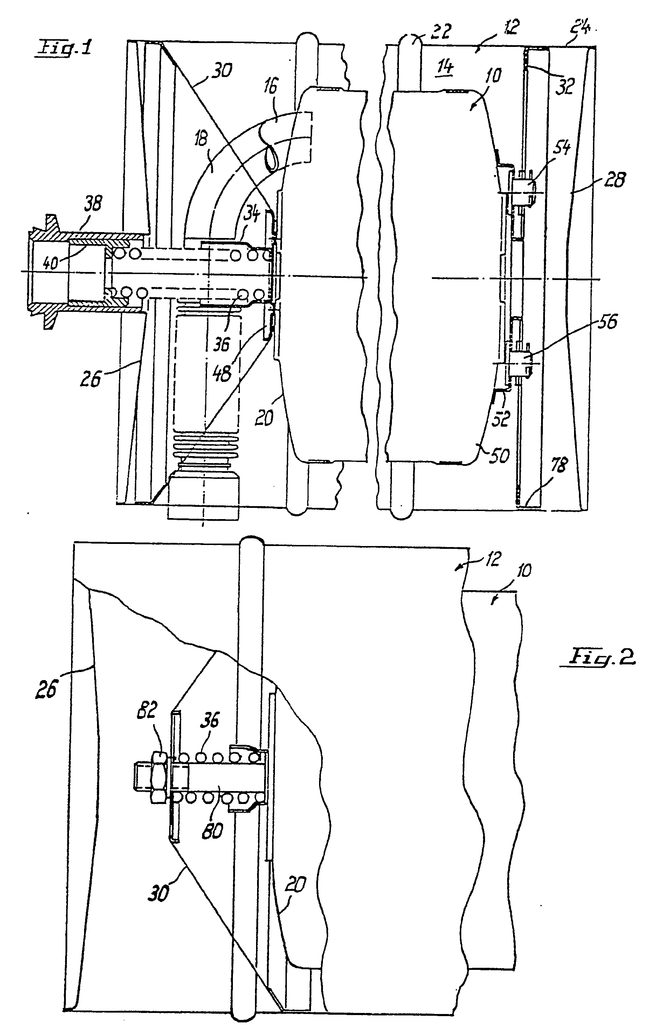

Das äußere Gehäuse 12 besteht aus einem durch Sicken 22 verstärkten zylindrischen Mantel 24 und zwei in diesen Mantel 24 eingesetzten Stirnwänden 26 und 28. Der linken Stirnwand 26 (Fig. 1) benachbart, ist ein Aufhängeelement 30 an der Innenseite des äußeren Gehäuses 12, beispielsweise durch Schweißen, befestigt. Der rechten Stirnwand 28 benachbart, ist ein weiteres Aufhängeelement 32 an der Innenfläche des Mantels 24 befestigt.

Im Zentrum der linken Stirnwand 20 des inneren Gehäuses 10 ist eine Führungshülse 34 für eine Schraubendruckfeder 36 angebracht, die koaxial zur Achse der Gehäuse 10 und 12 zwischen dem inneren Gehäuse 10 und dem äußeren Gehäuse 12 eingespannt ist. Die der Stirnwand 20 gegenüberliegende Stirnwand 26 des äußeren Gehäuses 122 weist ebenfalls eine Führungshülse 38 für die Druckfeder 36 auf, die mit einem axial verstellbaren Einsatz 40 zur Veränderunge der wirksamen Länge der Druckfeder 36 versehen ist.

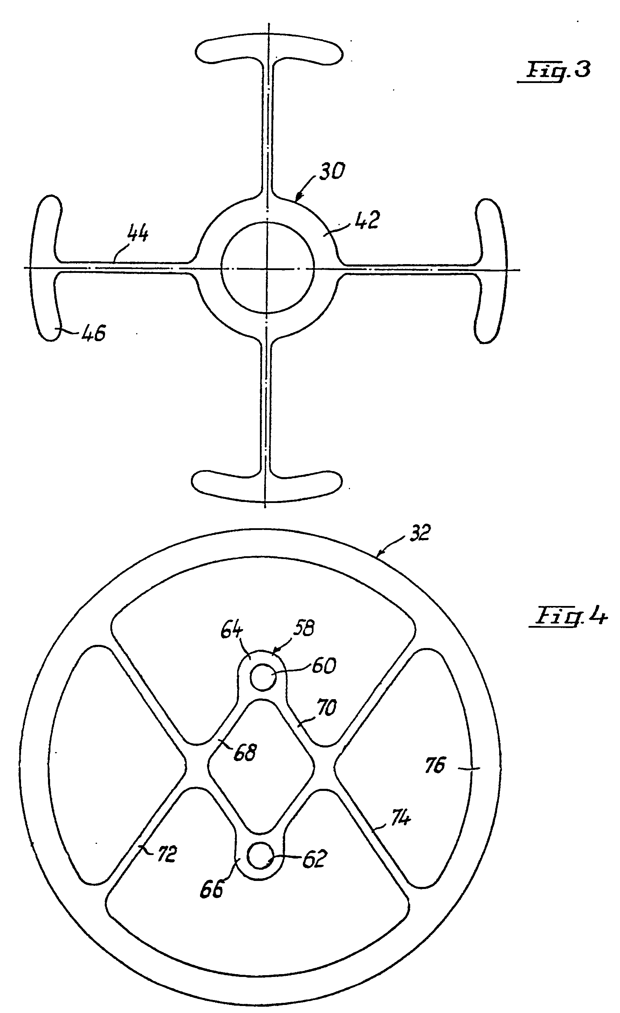

Das Aufhängeelement 30 (Fig. 3) besitzt einen inneren, ringförmigen Rahmen 42, von dem aus sich vier jeweils um 90° gegeneinander versetzte radiale Stege 44 nach außen erstrecken, die an ihren Enden mit Befestigungsflanschen 46 zur Verbindung mit dem Mantel 24 versehen sind. Die Stege 44 sind dabei gegenüber der Ebene des inneren Rahmens 42 abgewinkelt, so daß sie zur Achse des inneren Rahmens einen spitzen Winkel einschließen und durch die Druckfeder 36 ständig unter Spannung gehalten werden. Zur Befestigung des inneren Rahmens 42 an der Stirnwand 20 kann eine Druckplatte 48 verwendet werden, die ebenfalls ringförmig die Führungshülsen 34 umgreift und die mit der Stirnwand 20 des inneren Gehäuses 10 verbunden ist.

An der anderem Stirnwand 50 des inneren Gehäuses 10 ist zum Anschluß des Aufhängeelements 32 eine Konsole 52 angebracht, auf der in der vertikalen Symmetrieebene des inneren Gehäuses 10 mit gleichem Abstand von der Achse dieses Gehäuses 10 zwei Anschlußbolzen 54 und 56 angeordnet sind, denen an einem inneren Rahmen 58 des Aufhängeelements 32 zwei Bohrungen 60 und 62 zugeordnet sind. Von den diese Bohrungen 60 bzw. 62 umgebenden Abschnitten 64 bzw. 66 des inneren Rahmens 58 gehen paarweise Stege 68 und 70 bzw. 72 und 74 aus. Die Stege 68 und 70 bzw. 72 und 74 eines jeden Stegpaares sind jeweils derart V-förmig angeordnet, daß sie sich im Abschnitt 64 bzw. 66 vereinigen und die im jeweils anderen Anbschnitt 66 bzw. 64 angeordnete Bohrung 62 bzw. 60 auf ihrer Winkelhalbierenden liegt und von ihnen eingeschlossen wird. Die beiden Stegpaare 68 und 70 bzw. 72 und 74 kreuzen sich somit gegenseitig, wodurch der innere Rahmen 58 eine rautenförmige Gestalt erhält. Die äußeren Enden der Stege 68 bis 74 sind durch einen ringförmigen äußeren Rahmen 76 miteinander verbunden, der eine der Innenfläche des Mantels 24 verbindbare Abwinkelung 78 aufweist.

Bei dieser Anordnung dient das Aufhängeelement 40 in erster Linie der axialen Festlegung zwischen innerem Gehäuse 10 und äußerem Gehäuse 12, während das Aufhängeelement 32 in erster Linie den radialen Abstand zwischen beiden Gehäusen 10 und 12 festlegt und zugleich eine Verdrehung der beiden Gehäuse 10 und 12 gegeneinander verhindert.

Statt die Druckfeder 36 unmittelbar zwischen dem inneren Gehäuse 10 und dem äußeren Gehäuse 12 anzuordnen, kann sie, wie aus Fig. 2 ersichtlich ist, beispielsweise auch am inneren Gehäuse 10 unmittelbar und am äußeren Gehäuse 12 mittelbar dadurch abgestützt sein, daß die Druckfeder 36 einerseits an der Stirnwand 20 des inneren Gehäuses 10 und andererseits am Aufhängeelement 30 abgestützt ist, wobei die Druckfeder 36 von einem mit der Stirnwand 20 verbundenen Führungsbolzen 80 durchzogen wird, auf dem auf der vom inneren Gehäuse 10 abgewandten Seite des Aufhängeelements 30 eine einstellbare Mutter 82 angeordnet ist.

## Ansprüche

1. Wärmespeicher, insbesondere Latentwärmespeicher für durch Motorabwärme gespeiste Kraftfahrzeugheizungen, mit einem einen Speicherkern umschließenden inneren Gehäuse (10) und mit einem das innere Gehäuse (10) mit Abstand umgebenden äußeren Gehäuse (12), mit einer Wärmeisolierung zwischen innerem und äußerem Gehäuse und mit einer Zuflußleitung (16) und einer Abflußleitung (18) für ein wärmetransportierendes Strömungsmittel, die durch die Wärmeisolierung zum inneren Gehäuse (10) führen, dadurch gekennzeichnet, daß das innere Gehäuse (10) an zwei voneinander abgewandten Stirnseiten (20, 50) über jeweils eine Gruppe von für die übertragung von Zugkräften dimensionierten Stegen (44 ; 68, 70, 72, 74) am äußeren Gehäuse (12) aufgehängt ist und daß zwischen einer Stirnwand (20) des inneren Gehäuses (10) und dem äußeren Gehäuse (12) mindestens eine Feder (36) derart eingespannt ist, daß sie bestrebt ist, die Stege (44 ; 68, 70, 72, 74) auf Zug zu belasten.

2. Wärmespeicher nach Anspruch 1, dadurch gekennzeichnet, daß zumindest die Stege (44) einer Gruppe schräg zur Wirkungslinie der Feder (36) verlaufen.

3. Wärmespeicher nach Anspruch 1, dadurch gekennzeichnet, daß die Zufluß- (16) und die Abflußleitung (18) zumindest in der Nähe der Stirnwand (20) des inneren Gehäuse (10) austreten, an der die Feder (36) angreift.

4. Wärmespeicher nach Anspruch 1, dadurch gekennzeichnet, daß die Stege (44 ; 68, 70, 72, 74) zumindest einer Gruppe zu einem Aufhängeelement (30 ; 32) vereinigt sind.

5. Wärmespeicher nach Anspruch 4, dadurch gekennzeichnet, daß zumindest eine Aufhängsvorrichtung (32) verdrehfest mit dem inneren Gehäuse (10) verbunden ist.

6. Wärmespeicher nach Anspruch 5, dadurch gekennzeichnet, daß an einer Stirnwand (50) des inneren Gehäuses (10) in symmetrischer Anordnung und mit Abstand voneinander zwei Befestigungspunkte (54, 56) für die Aufhängevorrichtung (32) angeordnet sind.

7. Wärmespeicher nach Anspruch 6, dadurch gekennzeichnet, daß die Aufhängevorrichtung (32) zwei den Befestigungspunkten (54, 56) am inneren Gehäuse (10) zugewandte Anschlußstellen (60, 62) aufweist, von denen aus jeweils zwei V-förmig angeordnete Stege (68, 70 ; 72, 74) zu einem äußeren Rahmen (76) verlaufen, die die andere Anschlußstelle (62, 60) auf ihrer Winkelhalbierenden zwischen sich einschließen, so daß sich die beiden V-förmig angeordneten Stegpaare unter Bildung eines rautenförmigen inneren Rahmens (58) kreuzen.

8. Wärmespeicher nach Anspruch 1, dadurch gekennzeichnet, daß die Feder (36) zwischen einander gegenüberliegenden Stirnwänden (20, 26) des inneren (10) und des äußeren (12) Gehäuses eingespannt ist.

9. Wärmespeicher nach Anspruch 1, dadurch gekennzeichnet, daß die Feder (36) zwischen der Stirnwand (20) des inneren Gehäuses (10) und dem dieser Stirnwand zugeordneten Aufhängeelements (30) eingespannt ist.

10. Wärmespeicher nach einem der Ansprüche 8 oder 9, dadurch gekennzeichnet, daß die Feder (36) im Zentrum der Stirnfläche (20) des inneren Gehäuses (10) abgestützt ist.

11. Wärmespeicher nach Anspruch 10, dadurch gekennzeichnet, daß das Aufhängeelement (30) an der mit der Feder (36) zusammenwirkenden Stirnwand (20) des inneren Gehäuses (10) mit einer zentralen Anschlußstelle (42) versehen ist, in welcher sich die Stege (44) vereinigen.

12. Wärmespeicher nach Anspruch 11, dadurch gekennzeichnet, daß an der von der Feder (36) beaufschlagten Stirnfläche (20) eine Führungshülse (38) für die Feder (36) angeordnet und die zentrale Anschlußstelle (42) der Aufhängevorrichtung (30) als ein diese Führungshülse (38) umgreifender Ring ausgebildet ist.

13. Wärmespeicher nach Anspruch 1, dadurch gekennzeichnet, daß die wirksame Länge der Feder (36) einstellbar ist.

14. Wärmespeicher nach Anspruch 4, dadurch gekennzeichnet, daß die Aufhängeelemente (30, 32) als Stanzteile ausgebildet sind.

## Claims

1. A heat storage means, and more particularly a latent heat storage means for motor vehicle heating systems run on heat dissipated from the engine, comprising an inner housing (10) surrounding a storage core and an outer housing (12), which surrounds the inner housing (10) with a clearance, the thermal insulation between the inner and the outer housings and a feed duct (16) and a drain duct (18) for a heat vehicle fluid, such ducts running through thermal insulation to the inner housing (10), characterized in that the inner housing (10) is supported at two mutually remote end surfaces (20 and 50) via a respective group of ribs (44 ; 68, 70, 72 and 74), dimensioned for the transmission of tensile forces, on the outer housing (12) and in that between one end wall (20) of the inner housing (10) and the outer housing (12) at least one spring (36) is so tensioned that it tends to tensilely load the ribs (44 ; 68, 70, 72 and 74).

2. The heat storage means as claimed in claim 1, characterized in that at least the ribs (44) of one group extend obliquely in relation to the line of action of the spring (36).

3. The heat storage means as claimed in claim 1, characterized in that the feed (16) and drain (18) ducts at least emerge in the vicinity of the end wall (20) of the inner housing (10)n which is engaged by the spring (36).

4. The heat storage means as claimed in claim 1, characterized in that the ribs (44 ; 68, 70, 72 and 74) of at least one group are combined as a single supporting element (30 ; 32).

5. The heat storage means as claimed in claim 4, characterized in that at least one support device (32) is connected with the inner housing (10) in a torsionally stiff manner.

6. The heat storage means as claimed in claim 5 characterized in that on one end wall (50) of the inner housing (10) two attachment points (54 and 56) are arranged for the supporting device (32), such points being placed in a symmetrical arrangement and with a clearance between them.

7. The heat storage means as claimed in claim 6, characterized in that the supporting device (32) has two connection points (60 and 62) adjacent to the joints (54 and 56) on the inner housing (10), and from these joints two respective ribs (68, 70 ; 72 and 74), which are placed in a V-like arrangement, extend to an outer frame (76), which encompass the other joint (62 and 60) on its bisector between them in such a manner that the two pairs of ribs in a V-like arrangement intersect with the formation of a rhombic inner frame (58).

8. The heat storage means as claimed in claim 1, characterized in that the spring (36) is tensioned between mutually opposite end walls (20 and 26) of the inner (10) and of the outer (12) housing.

9. The heat storage means as claimed in claim 1, characterized in that the spring (36) is tensioned between the end wall (20) of the inner housing (10) and the supporting element (30) associated with this end wall.

10. The heat storage means as claimed in claim 8 or claim 9, characterized in that the spring (36) is mounted in the center of the end surface (20) of the inner housing (10).

11. The heat storage means as claimed in claim 10, characterized in that on the end wall (20) in cooperation with the spring (36), of the inner housing (10) the supporting element (30) is provided with a central joint (42), at which the ribs (44) are united with each other.

12. The heat storage means as claimed in claim 11, characterized in that the end surface (20) engaged by the spring (36) bears a guide sleeve (38) for the spring (36) and the central joint (42) of the supporting device (30) is in the form of a ring fitted around this guide sleeve (38).

13. The heat storage means as claimed in claim 1, characterized in that the effective length of the spring (36) is able to be adjusted.

14. The heat storage means as claimed in claim 4, characterized in that the supporting elements (30 and 32) are in the form of stampings.


## Revendications

1. Accumulateur de chaleur, en particulier accumulateur de chaleur latente pour chauffage de véhicule alimenté par le dégagement de chaleur du moteur, comportant un carter intérieur (10) entourant le noyau de l'accumulateur et comportant un carter extérieur (12) enveloppant, à une certaine distance, le carter intérieur (10), comportant une isolation thermique entre les carters intérieur et extérieur et comportant une conduite d'alimentation (16) et une conduite d'évacuation (18) pour un fluide circulant caloporteur, conduites qui traversent l'isolation thermique vers le carter intérieur (10), caractérisé en ce que le carter intérieur (10) est suspendu au carter extérieur (12) par deux flasques (20, 50), chaque fois au moyen d'un groupe d'entretoises (44 ; 68, 70, 72, 74) dimensionnées pour reprendre les forces de traction, et en ce qu'entre un flasque (20) du carter intérieur (10) et le carter extérieur (12), au moins un ressort (36) est mis en serrage de telle façon qu'il tend à soumettre les entretoises (44 ; 68, 70, 72, 74) à une traction.

2. Accumulateur de chaleur suivant la revendication 1, caractérisé en ce qu'au moins les entretoises (44) d'un groupe sont disposées inclinées par rapport à la ligne d'action du ressort (36).

3. Accumulateur de chaleur suivant la revendication 1, caractérisé en ce que la conduite d'alimentation (16) et la conduite d'évacuation (18) ressortent au moins au voisinage du flasque (20) du carter intérieur (10), sur lequel agit le ressort (36).

4. Accumulateur de chaleur suivant la revendication 1, caractérisé en ce que les entretoises (44 ; 68, 70, 72, 74) d'au moins un groupe sont raccordées à un organe de suspension (30 ; 32).

5. Accumulateur de chaleur suivant la revendication 4, caractérisé en ce qu'au moins un dispositif de suspension (32) est relié au carter intérieur (10) sans pouvoir tourner.

6. Accumulateur de chaleur suivant la revendication 5, caractérisé en ce que deux points de fixation (54, 56) pour le dispositif de suspension (32) sont disposés symétriquement et à une certaine distance l'un de l'autre, sur un flasque (50) du carter intérieur (10).

7. Accumulateur de chaleur suivant la revendication 6, caractérisé en ce que le dispositif de suspension (32) présente deux positions de raccordement (60, 62) tournées vers les points de fixation (54, 56) sur le carter intérieur (10), positions à partir de chacune desquelles deux entretoises (68, 70 ; 72, 74), disposées en formant un V, partent vers un cadre extérieur (76), entretoises qui contiennent entre elles, sur la bissectrice de leur angle, les autres positions de raccordement (60, 62), de telle façon que les deux paires d'entretoises disposées en V se croisent en formant un cadre intérieur (58) en forme de losange.

8. Accumulateur de chaleur suivant la revendication 1, caractérisé en ce que le ressort (36) est mis en serrage entre des flasques (20, 26) du carter intérieur (10) et du carter extérieur (12).

9. Accumulateur de chaleur suivant la revendication 1, caractérisé en ce que le ressort (36) est mis en serrage entre le flasque (20) du carter intérieur (10) et l'organe de suspension (30) associé à ce flasque.

10. Accumulateur de chaleur suivant la revendication 8 ou la revendication 9, caractérisé en ce que le ressort (36) prend appui au centre du flasque (20) du carter intérieur (10).

11. Accumulateur de chaleur suivant la revendication 10, caractérisé en ce que l'organe de suspension (30) est muni, sur le flasque (20) du carter intérieur (10), agissant en combinaison avec le ressort (36), d'une position centrale de raccordement (42), où se rejoignent les entretoises (44).

12. Accumulateur de chaleur suivant la revendication 11, caractérisé en ce qu'une douille de guidage (38) pour le ressort (36) est disposée sur le flasque (20) et en ce que la position centrale de raccordement (42) de l'organe de suspension (30) est réalisée sous la forme d'un anneau entourant cette douille de guidage (38).

13. Accumulateur de chaleur suivant la revendication 1, caractérisé en ce que la longueur utile du ressort (36) peut être réglée.

14. Accumulateur de chaleur suivant la revendication 4, caractérisé en ce que les organes de suspension (30, 32) sont réalisés sous la forme de pièces estampées.

Fig.1

Fig.2

_Fig._3

_Fig._4